# EUROPEAN PATENT APPLICATION

(11) **EP 1 749 801 A1**
(43) Date of publication of application: **07.02.2007**
(21) Application number: 06290370.3
(22) Date of filing: 06.03.2006
(51) Int. Cl.: C03B 33/06, B67B 7/92, B26F 3/00, B26D 7/18

(54) **Ampule cutting apparatus**

(30) Priority: 05.08.2005 KR 2005071533
(71) Applicant: Samsung Gwangju Electronics Co., Ltd., Gwangju-city (KR)
(72) Inventor: Oh, Jang-Keun, Seo-gu Gwangju-city (KR); Seo, Ji-Won, Gwangsan-gu Gwangju-city (KR)
(74) Representative: Blot, Philippe Robert Emile

(57) **Abstract**

Disclosed is an ampule cutting apparatus including an ampule cutting unit for housing and cutting an ampule head, a object collecting unit (20) for sucking the cut ampule head (H) and minute flakes generated in the ampule cutting operation with the air, and separating the objects from the air, a negative pressure generating device (50) for applying a negative pressure to the object collecting unit; and a collecting unit for collecting the objects sucked by the object collecting unit.

## Description

### CROSS-REFERENCE TO RELATED APPLICATIONS

This application claims benefit under 35 U.S.C. § 119 from Korean Patent Application No. 2005-71533, filed on August 5, 2005, the entire content of which is incorporated herein by reference.

### BACKGROUND OF THE INVENTION

### 1. Field of the Invention:

The present invention relates to an ampule cutting apparatus, and more particularly, to an ampule cutting apparatus using a cyclone object collecting device.

### 2. Description of the Related Art

In general, after a neck of an ampule is cut, an injection of the ampule is inserted through a needle of a syringe. When the neck of the ampule is cut, minute glass flakes (or glass powder) generated in the neck are partially dropped outside the ampule and partially inserted into the ampule. Especially, since the inside pressure of the airtight ampule is maintained lower than the atmospheric pressure, the glass flakes generated in the ampule neck cutting operation are possibly inserted into the ampule.

In the case that the injection containing the minute glass flakes is injected into a patient, the glass flakes may be left in the body or blood of the patient. The glass flakes accumulated in the body have potential possibility of danger in the tissue or organ, thereby occluding veins and causing chronic tissue necrosis.

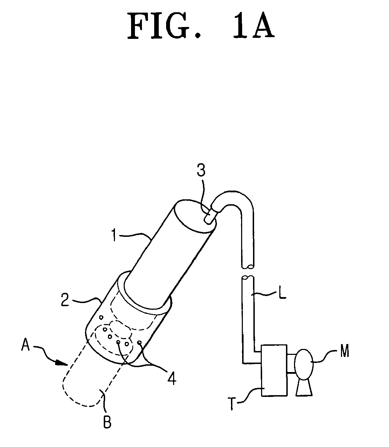

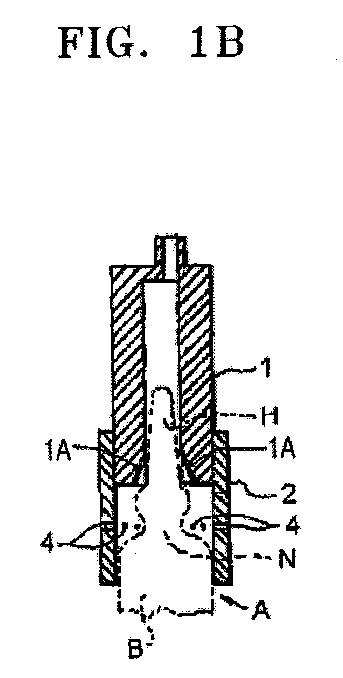

In order to solve the above problems, as disclosed in U.S. Patent No. 4,417,679 (the '679 patent) was proposed. In the '679 patent, an ampule cutting apparatus, as shown in FIG. 1, includes a vacuum motor M for sucking flakes in an ampule A cutting operation, a tank T for collecting the sucked flakes, a suction path L for inducing the flakes to the tank T, a flexible jacket 2 into which a shoulder of an ampule body B is inserted, a head holder 1 into which an ampule head H is inserted, and a plurality of apertures 4 formed on the outer circumference of the jacket 2, for providing the outdoor air into the jacket 2 to transfer the flakes to the tank T through the suction path L.

In the ampule cutting apparatus of the '679 patent, in a state where the ampule head H is inserted into the ampule holder 1, the ampule body B and the flexible jacket 2 are pushed to one direction to cut the ampule head H. Minute glass flakes generated around the cutting surface are collected in the tank T with the air sucked into the jacket 2 from the plurality of apertures 4 through the inside path of the head holder 1 and the suction path L.

In a state where the cut ampule head H is inserted into the head holder 1, the flakes generated in the cutting part by the ampule cutting operation are discharged to the suction path L through a plurality of grooves 1A as shown in FIG. 1B. However, the flakes that have not been discharged through the narrow grooves 1A are inserted into the ampule A.

In addition, the cut ampule head H is dropped into a collecting box disposed at the lower portion of the jacket 2. The head H having the sharp cutting part is externally exposed, so that the user may be hurt through carelessness.

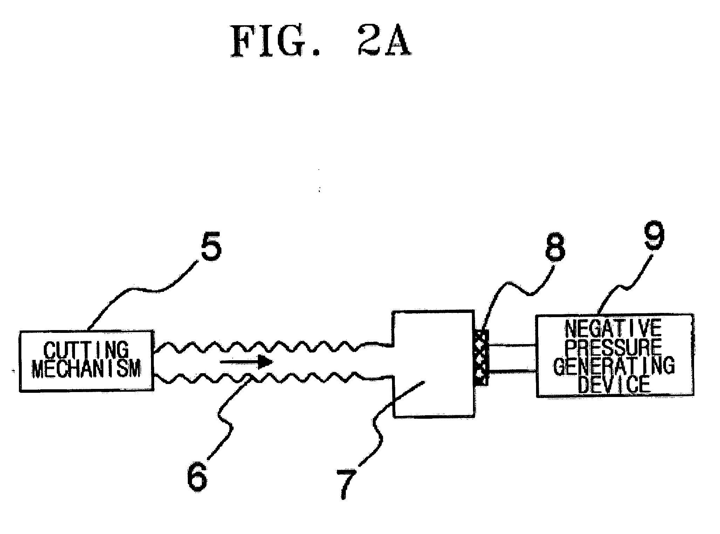

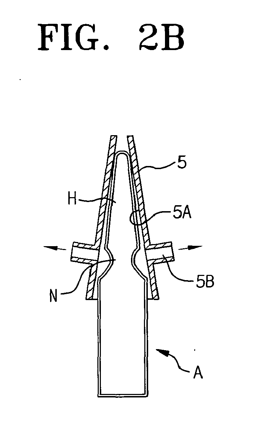

In order to solve the foregoing problems, the ampule cutting apparatus as disclosed in Korea Utility Model Registration No. 371200 was proposed. Here, the ampule cutting apparatus, as shown in FIG. 2, collects an ampule head H and flakes generated in a cutting part by a collecting unit 7 through a tube 6, by using a cylindrical cutting mechanism 5 having a larger diameter than an outer diameter of an ampule A.

In this ampule cutting apparatus, a negative pressure generating device 9 for sucking the cut head H and the flakes through the tube 6 is installed at the rear end of the collecting unit 7, and a filtering net 8 is installed between the collecting unit 7 and the negative pressure generating device 9, for preventing inflow of the flakes into the negative pressure generating device 9.

Referring to FIG. 2B, in the cutting mechanism 5, a circular conical positioning unit 5A is formed to correspond to the outer circumference of the ampule head H, and a plurality of suction holes 5B are formed in the parts corresponding to the periphery of the ampule neck N, for sucking the flakes generated in the ampule head cutting operation.

Accordingly, in the conventional arts, the direction of collecting the flakes and the head is identical to the direction of sucking the air. After the flakes and the head are collected by the collecting unit 7, the air is sucked into the negative pressure generating device 9 through the filtering net 8 installed at the rear end of the collecting unit 7.

When the cut heads or flakes collected by the collecting unit 7 increase, the flakes adsorbed to the filtering net 8 increase. Therefore, the filtering net 8 loses its filtering function and restricts air transmission, thereby reducing suction efficiency of the negative pressure generating device 9.

Accordingly, the ampule cutting apparatus cannot attain the original object of sucking the glass flakes generated in the ampule cutting operation not to be inserted into the ampule.

To solve the above problems, the user must frequently empty the collecting unit 7 and clean or replace the filtering net 8.

As illustrated in FIG. 2A, when the ampule head H is inserted into the cylindrical cutting mechanism to be cut, the ampule head H is not stably positioned. If the user is not careful in the cutting operation, he/she may be hurt by the sharp cutting part of the ampule.

The circular conical cutting mechanism of FIG. 2B can more stably position the ampule head H than the cylindrical cutting mechanism in the ampule cutting operation. However, the suction path is restricted to the plurality of suction holes 5B. Accordingly, the glass flakes are sucked, but the cut head H is not sucked.

As a result, as mentioned above, the head H having the sharp cutting part is not collected by the collecting unit 7 but externally exposed. Thus, the user may be hurt by the cut head H through carelessness.

### SUMMARY OF THE INVENTION

Accordingly, it is an object of the present invention to provide an ampule cutting apparatus that can optimize an ampule cutting environment by easily housing an ampule at a comfortable angle regardless of an ampule size and stably supporting the ampule.

Another object of the present invention is to provide an ampule cutting apparatus that can smoothly suck a cut ampule head and flakes and that can maximize suction efficiency by preventing overheating of a vacuum motor in a suction operation.

Yet another object of the present invention is to provide an ampule cutting apparatus that can improve suction efficiency by using a cyclone object collecting unit, and that can provide a pleasant operational environment by reducing noises generated by the cyclone object collecting unit in a suction operation.

Yet another object of the present invention is to provide an ampule cutting apparatus that can sterilize a nozzle or a suction tube contaminated by an injection contained in an ampule in an ampule cutting operation.

In order to achieve the above objects of the invention, there is provided an ampule cutting apparatus, including: an ampule cutting unit for housing and cutting an ampule head; a object collecting unit for sucking the cut ampule head and minute flakes generated in the ampule cutting operation with the air, and separating the objects from the air; a negative pressure generating device for applying a negative pressure to the object collecting unit; and a collecting unit for collecting the objects sucked by the object collecting unit.

Preferably, the object collecting unit has a cyclone object collecting structure, and the negative pressure generating device is a vacuum motor or a vacuum pump.

Preferably, the ampule cutting unit includes: a suction tube having its one side detachably coupled to an intake port of the object collecting unit; a nozzle inserted into the suction tube; and a fixing unit for fixing the front end of the nozzle to be aligned with the front end of the other side of the suction tube.

The nozzle includes a main suction hole having a diameter larger than the ampule head and smaller than an ampule body, for preventing the ampule body from being sucked into the suction tube during the ampule cutting operation.

The inner circumference of the main suction hole has a streamline shape corresponding to the shape of the ampule head, for stably supporting the ampule and minimizing the ampule cutting force in the ampule cutting operation.

Preferably, a plurality of auxiliary suction holes are formed around the front end of the nozzle on which an inserted ampule neck is positioned, for sucking the flakes.

The front end of the nozzle is detachably coupled to the fixing unit. The nozzle is selectively used according to the capacity or shape of the ampule.

The ampule cutting apparatus further includes a first coupling ring coupled to the other end of the suction tube, and a second coupling ring coupled to the intake port of the object collecting unit. The first and second coupling rings are detachably coupled to each other, so that the suction tube can be easily connected or disconnected to/from the intake port of the object collecting unit and that alien substances of the suction tube can be easily removed.

The collecting unit includes: a first collecting vessel disposed at the bottom end of the object collecting unit, for primarily collecting the objects sucked into the object collecting unit, and discharging a predetermined amount of objects to the lower direction when the negative pressure generating device stops the operation; and a second collecting vessel for finally collecting the objects discharged from the first collecting vessel.

The first collecting vessel includes: a body having its top and bottom ends opened and its top end detachably coupled to be linked to the cyclone object collecting unit; a discharge plate hinge-coupled to one side of the bottom end of the body, for opening or closing the bottom end of the body; and at least one elastic member installed at the hinge-coupling part of the discharge plate and the body, for elastically coupling the discharge plate to the body. Preferably, the elastic members are torsion springs.

The ampule cutting apparatus further includes a housing for housing the ampule cutting unit, the object collecting unit, the collecting unit and the vacuum motor.

A protruding unit is extended from one surface of the housing, for housing the ampule cutting unit. The bottom surface of the protruding unit formed on the same plane surface as the bottom surface of the ampule cutting unit has an inclination angle of 5 to 85°, preferably, 30 to 60°. The inclination angle helps the user to set the hand moving range, so that the user cannot be hurt by the ampule cutting part in the ampule cutting operation.

The ampule cutting apparatus further includes a sterilizing unit installed around the suction tube, for sterilizing the suction tube and the nozzle contaminated by the injection contained in the ampule.

The sterilizing unit includes: an ultraviolet lamp disposed adjacently to the suction tube; a grill unit formed at the part of the suction tube adjacent to the ultraviolet lamp, for sterilizing the nozzle inserted into the suction tube by the ultraviolet rays emitted by the ultraviolet lamp; and a plurality of ultraviolet transmission members inserted into the grill unit, for sealing up the grill unit.

Preferably, the ultraviolet transmission members are made of transparent fluorine-containing polymers such as TEFLON, which is commercially available from E.I. du Pont de Nemours and Company.

### BRIEF DESCRIPTION OF THE DRAWINGS

The above aspects and features of the present invention will be more apparent by describing certain embodiments of the present invention with reference to the accompanying drawings, in which:

FIGS. 1A and 1B are a schematic perspective view and a cross-sectional view illustrating one example of a conventional ampule cutting apparatus.

FIGS. 2A and 2B are a schematic view and a cross-sectional view illustrating another example of the conventional ampule cutting apparatus.

FIG. 3A is a perspective view illustrating an ampule cutting apparatus in accordance with the present invention.

FIG. 3B is a schematic side-sectional view illustrating the inside structure of the ampule cutting apparatus in accordance with the present invention.

FIG. 4 is a partial perspective view illustrating a protruding unit for housing a suction tube in a housing of FIG. 3A.

FIG. 5 is a partial cross-sectional view illustrating an inclination angle of the bottom surface of the protruding unit of FIG. 4.

FIG. 6 is a disassembly cross-sectional view illustrating an ampule cutting unit of the ampule cutting apparatus in accordance with the present invention.

FIG. 7 is a perspective view illustrating a nozzle of FIG. 6.

FIG. 8 is a perspective view illustrating the ampule inserted into the nozzle of FIG. 6.

FIG. 9 is a partial cross-sectional view illustrating the front end of the nozzle of FIG. 8.

FIGS. 10A and 10B are schematic cross-sectional views illustrating a state where the ampule is inserted into the ampule cutting unit and a state where the ampule is cut by the ampule cutting unit, respectively.

FIGS. 11A and 11B are cross-sectional views illustrating states before and after the suction tube is coupled to an intake port of a cyclone object collecting unit through a pair of coupling rings, respectively.

FIG. 12 is a schematic perspective view illustrating an ultraviolet sterilizing unit of the ampule cutting apparatus in accordance with the present invention.

FIG. 13A is a side view illustrating the ultraviolet sterilizing unit of FIG. 12.

FIG. 13B is a rear view, seen from direction I of FIG. 13A.

FIG. 14 is a schematic disassembly perspective view illustrating a first collecting vessel of the ampule cutting apparatus in accordance with the present invention.

FIGS. 15A and 15B are side views illustrating open and close states of a discharge plate of the first collecting vessel of FIG. 14.

### DETAILED DESCRIPTION OF THE PREFERRED EMBODIMENTS

An ampule cutting apparatus in accordance with the present invention will now be described in detail with reference to the accompanying drawings.

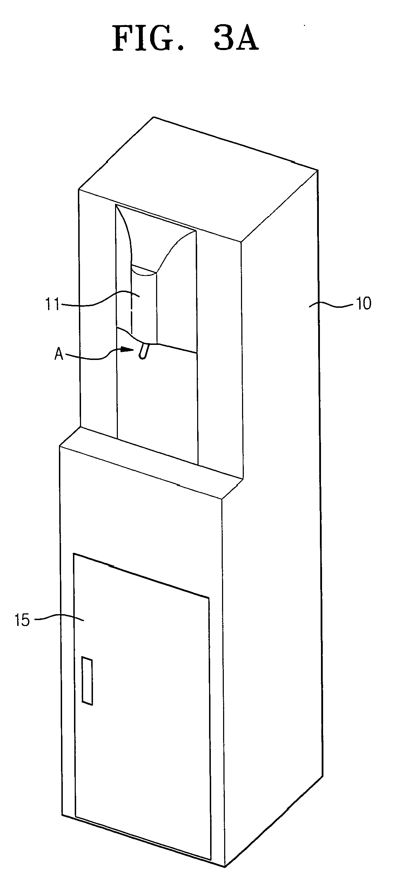

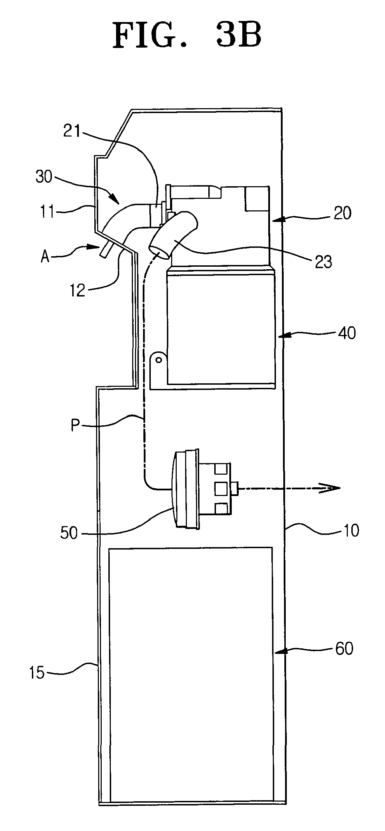

FIG. 3A is a perspective view illustrating the ampule cutting apparatus in accordance with the present invention, and FIG. 3B is a schematic side-sectional view illustrating the inside structure of the ampule cutting apparatus in accordance with the present invention.

Referring to FIGS. 3A and 3B, the ampule cutting apparatus includes a box-shaped housing 10, a cyclone object collecting unit 20 disposed at the top inside portion of the housing 10, , and an ampule cutting unit 30. The cyclone object collecting unit 20 is configured to suck and collect a cut ampule head H and flakes (hereinafter referred to individually and collectively as 'objects'). The ampule cutting unit 30, for housing and cutting the ampule head H, is linked and coupled to an intake port 21 of the cyclone object collecting unit 20.

In addition, the ampule cutting apparatus includes collecting units 40 and 60 for collecting the objects sucked by the cyclone object collecting unit 20 and a vacuum motor 50 for supplying a negative pressure to the cyclone object collecting unit 20. The collecting units 40 and 60 and the vacuum motor 50 are installed inside the housing 10.

The constitutional elements of the ampule cutting apparatus will now be explained in detail with reference to the accompanying drawings.

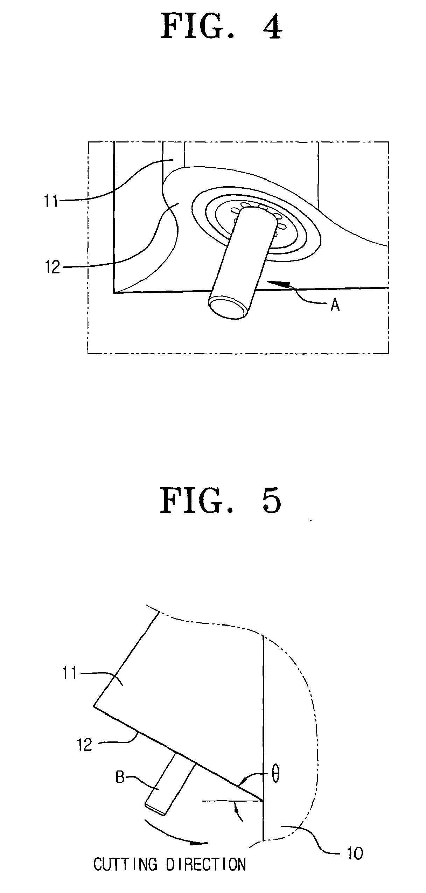

FIG. 4 is a partial perspective view illustrating a protruding unit for housing a suction tube in the housing of FIG. 3A, and FIG. 5 is a partial cross-sectional view illustrating an inclination angle of the bottom surface of the protruding unit of FIG. 4.

The ampule cutting unit 30 is installed at the top inside portion of the housing 10. In this case, the protruding unit 11 is formed on the top front surface of the housing 10, for covering the ampule cutting unit 30 protruded from the upper portion in the forward direction.

As illustrated in FIGS. 4 and 5, the bottom surface 12 of the protruding unit 11 has an angle θ of substantially 5 to 85°, preferably, 30 to 60° to the horizontal plane. The angle θ of protruding unit 11 helps the user to set the appropriate hand moving range in the ampule cutting operation.

That is, the ampule A cutting direction is the direction towards the front surface of the housing 10 as shown in FIG. 5. When the user cuts the ampule A by pushing an ampule body B in the cutting direction, his/her hand is inwardly bent and fixed to the front surface of the housing 10. Therefore, the user can safely and easily cut the ampule A.

Preferably, the angle θ of the bottom surface 12 can be appropriately adjusted among the suggested angles in consideration of the size of the ampule A or other factors.

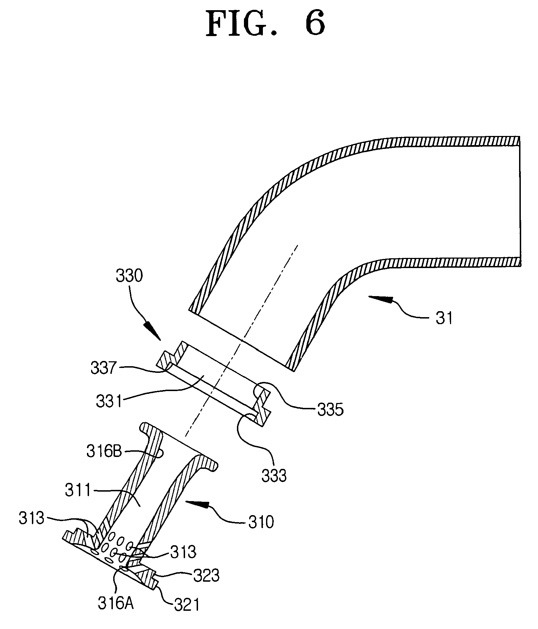

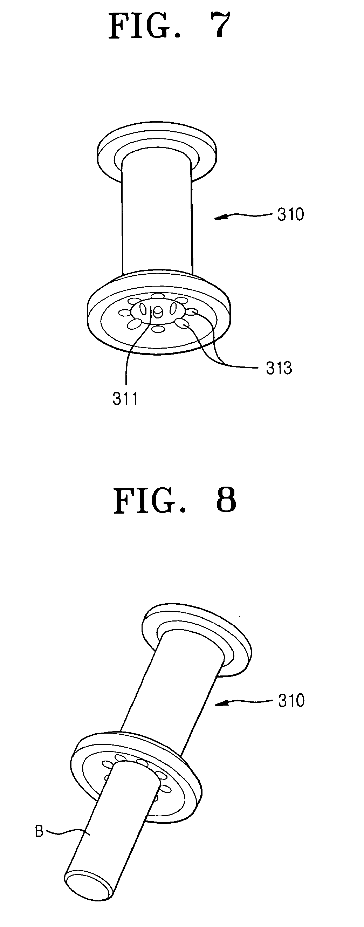

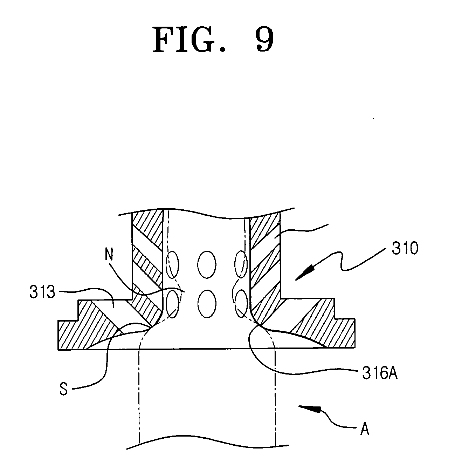

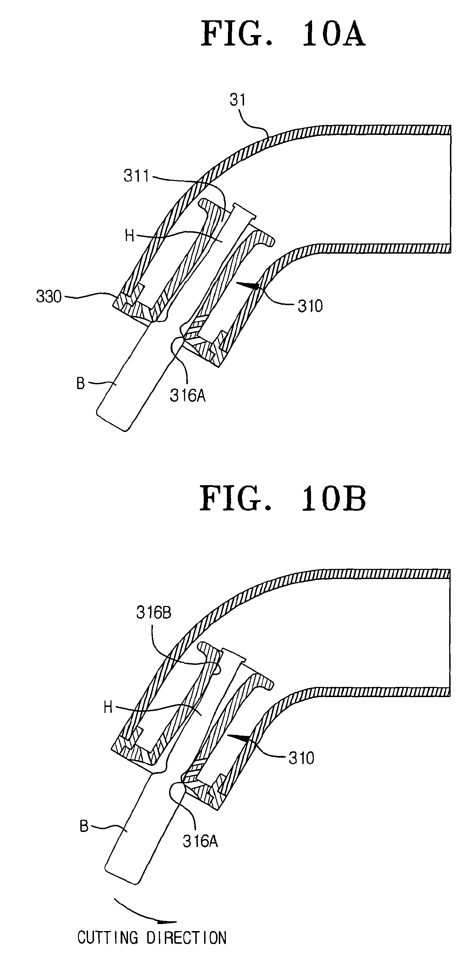

FIG. 6 is a disassembled cross-sectional view illustrating the ampule cutting unit of the ampule cutting apparatus in accordance with the present invention. FIG. 7 is a perspective view illustrating a nozzle of FIG. 6. FIG. 8 is a perspective view illustrating the ampule inserted into the nozzle of FIG. 6. FIG. 9 is a partial cross-sectional view illustrating the front end of the nozzle of FIG. 8. FIGS. 10A and 10B are schematic cross-sectional views illustrating a state where the ampule is inserted into the ampule cutting unit and a state where the ampule is cut by the ampule cutting unit, respectively.

As shown in FIGS. 3B and 6, the ampule cutting unit 30 includes a suction tube 31, a fixing unit 330, and a nozzle 310. The suction tube 31 has one end detachably coupled to the intake port 21 of the cyclone object collecting unit 20 and another end detachably coupled the nozzle 310 via the fixing unit 330.

As depicted in FIG. 10A, the nozzle 310 is inserted into the suction tube 31 through a through hole 331 of the fixing unit 330. An outer circumference of a front end 321 of the nozzle 310 and an outer circumference of a protruding jaw 323 are pressed in a first inner circumference 333 and a second inner circumference 335 of the fixing unit 330, respectively.

Here, the nozzle 310 pressed in the fixing unit 330 is not any more inserted by the fixing jaw 337.

In the ampule cutting unit 30, the nozzle 310 and the fixing unit 330 for fixing the nozzle 310 can be easily replaced according to the capacity or shape of the ampule A.

A main suction hole 311 is formed in the nozzle 310 in the longitudinal direction. A plurality of auxiliary suction holes 313 for linking the main suction hole 311 to the outside space of the nozzle 310 are inclinedly formed around the front end 321 of the nozzle 310.

The main suction hole 311 has a diameter larger than the ampule head H and smaller than the ampule body B, thereby preventing the ampule body B from being sucked into the cyclone object collecting unit 20 by the negative pressure generated in the nozzle 310 by the vacuum motor 50 in the ampule cutting operation.

The inner circumference of the main suction hole 311 has a streamline shape corresponding to the shape of the ampule head H, for stably supporting the ampule A and minimizing the cutting force in the ampule cutting operation.

That is, as shown in FIGS. 9, 10A and 10B, the front end of the main suction hole 311, namely, a shoulder positioning surface 316A is formed to correspond to the shoulder S of the ampule A, thereby stably supporting the ampule A inserted into the main suction hole 311.

In addition, the rear end of the main suction hole 311, namely, a head positioning surface 316B is formed to correspond to the head H of the ampule A. In a state where the ampule head H is inserted into the main suction hole 311 to cut the ampule A (refer to FIG. 10A), if the ampule body B is pushed to the front surface of the housing 10 (refer to FIGS. 10B and 5), one side of the shoulder S of the ampule A is supported by the shoulder positioning surface 316A, and the other side of the head H of the ampule A is supported by the head positioning surface 316B.

The ampule A having its two points supported can be easily cut by a small force.

On the other hand, as shown in FIG. 9, the plurality of auxiliary suction holes 313 are inclinedly formed around the front end 321 of the nozzle 310 on which the inserted ample neck N is positioned, for sucking minute flakes generated at the cutting part in the ample head H cutting operation.

Preferably, the inclination angle of the plurality of auxiliary suction holes 313 ranges from about 15 to 75° to the longitudinal direction of the nozzle 310 according to the shape and size of the ampule A.

In the case that the cut ampule head H does not pass through the main suction hole 311 but blocks the main suction hole 311, the plurality of auxiliary suction holes 313 serve to prevent overheating of the vacuum motor 50.

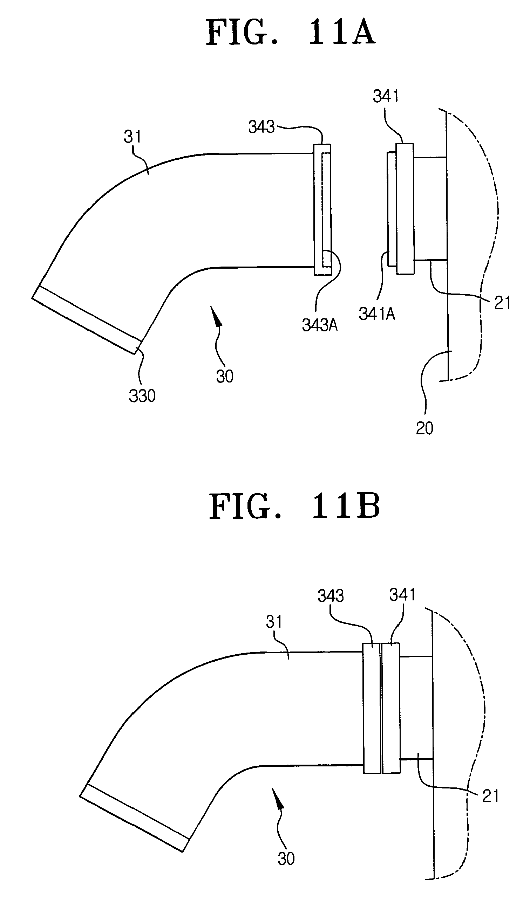

FIGS. 11A and 11B are cross-sectional views illustrating states before and after the suction tube is coupled to the intake port of the cyclone object collecting unit through a pair of coupling rings, respectively.

Referring to FIG. 11A, the ampule cutting unit 30 is detachably coupled to the intake port 21 of the cyclone object collecting unit 20 through the first and second coupling rings 341 and 343.

The first coupling ring 341 is fixedly coupled to one end of the intake port 21, and the second coupling ring 343 is coupled to the suction tube 31. The first and second coupling rings 341 and 343 have a protruding unit 341A and a groove 343A, and are detachably coupled to each other as shown in FIG. 11B.

Preferably, the first and second coupling rings 341 and 343 are made of a sealing material, for example, a rubber material.

The ampule cutting unit 30 can be disconnected from the intake port 21 of the cyclone object collecting unit 20 through the first and second coupling rings 341 and 343, and thus easily cleaned and repaired. It is thus easy to remove alien substances from the suction tube 31.

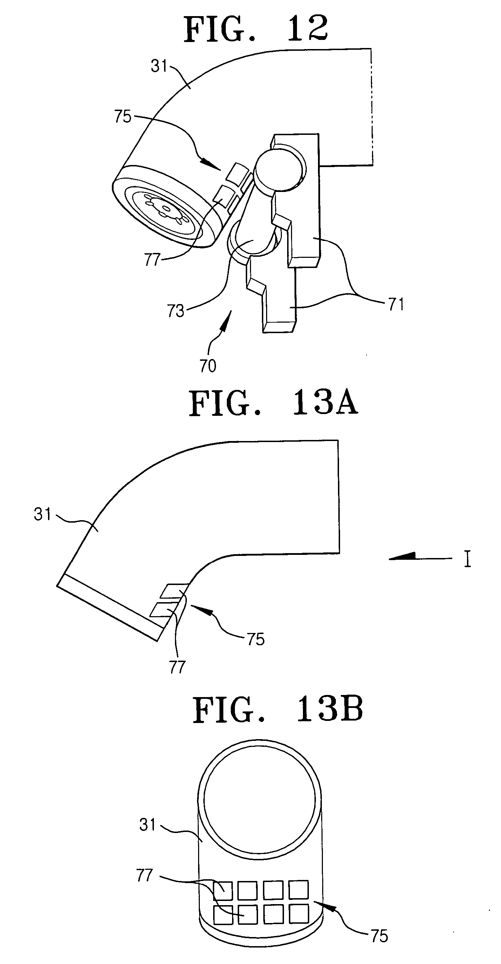

FIG. 12 is a schematic perspective view illustrating an ultraviolet sterilizing unit of the ampule cutting apparatus in accordance with the present invention, FIG. 13A is a side view illustrating the ultraviolet sterilizing unit of FIG. 12, and FIG. 13B is a rear view, seen from I direction of FIG. 13A.

As illustrated in FIG. 12, the ampule cutting apparatus includes the ultraviolet sterilizing unit 70 installed adjacently to the suction tube 31, for sterilizing the suction tube 31 and the nozzle 310 contaminated by the injection contained in the ampule A.

The ultraviolet sterilizing unit 70 includes an ultraviolet lamp 73 (consumed power: 3 to 4Watts) disposed adjacently to the suction tube 31, a pair of supporting members 71 coupled to the inside portion of the housing 10, for supporting the ultraviolet lamp 73, and a grill unit 75 formed at the part of the suction tube 31 adjacent to the ultraviolet lamp 73.

As shown in FIGS. 13A and 13B, the grill unit 75 is preferably formed to correspond to the ultraviolet lamp 73, for sterilizing the suction tube 31 and the nozzle 310 by the ultraviolet rays emitted from the ultraviolet lamp 73.

Preferably, suction tube 31 includes transparent ultraviolet transmission members 77 sealed therein. The transparent ultraviolet transmission members 77 allow the ultraviolet light from the ultraviolet lamp 73 into the suction tube. For example, transparent ultraviolet transmission members 77 can be made of transparent fluorine-containing polymers such as TEFLON.

Preferably, the positions of the grill unit 75 and the ultraviolet lamp 73 are appropriately varied by the position of the nozzle 310 varied by the cutting position of the ampule A.

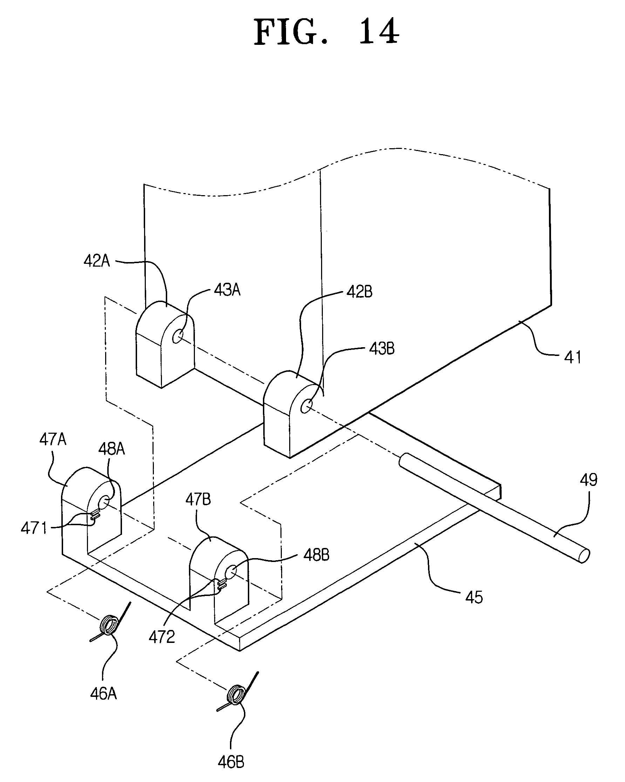

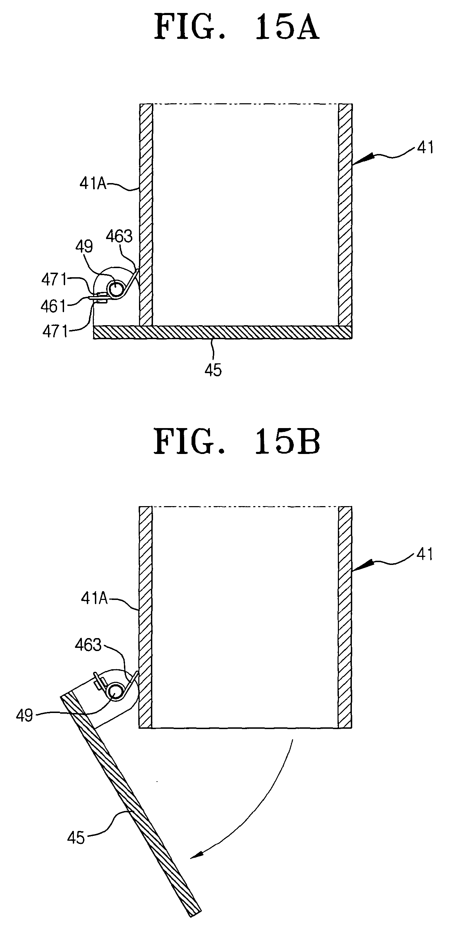

FIG. 14 is a schematic disassembly perspective view illustrating a first collecting vessel of the ampule cutting apparatus in accordance with the present invention, and FIGS. 15A and 15B are side views illustrating open and close states of a discharge plate of the first collecting vessel of FIG. 14.

The collecting units 40 and 60 include the first collecting vessel 40 and the second collecting vessel 60. The first collecting vessel 40 is detachably coupled to the bottom end of the cyclone object collecting unit 20. The second collecting vessel 60 collects the objects collected in the first collecting vessel 40 for final disposal.

The first collecting vessel 40 primarily collects the objects sucked into the cyclone object collecting unit 20, and discharges a predetermined amount of objects to the lower direction when the vacuum motor 50 stops the operation.

The second collecting vessel 60 finally collects the objects discharged from the first collecting vessel 40. A door 15 formed on the housing 10 as shown in FIG. 3A is opened to empty the second collecting vessel 60.

The structure of the first collecting vessel 40 will now be explained in detail.

As illustrated in FIG. 14, the first collecting vessel 40 includes a body 41 and a discharge plate 45. The body 41 has its top end detachably coupled to the bottom end of the cyclone object collecting unit 20. The discharge plate 45 is elastically hinge-coupled to one side of the bottom end of the body 41 and, thus, is configured for opening or closing the bottom end of the body 41.

First and second protrusions 42A and 42B are formed on the bottom end of one surface of the body 41 at predetermined intervals. Third and fourth protrusions 47A and 47B corresponding to the first and second protrusions 42A and 42B are formed on one side of the discharge plate 45.

As depicted in FIGS. 14 and 15a, the first to fourth protrusions 42A, 42B, 47A and 47B are hinge-coupled to each other by a hinge rod 49 passing through coupling holes 43A, 43B, 48A and 48B formed on the first to fourth protrusions 42A, 42B, 47A and 47B, respectively.

The discharge plate 45 is elastically hinge-coupled to the body 41 by first and second torsion springs 46A and 46B coupled to the hinge rod 49.

The first torsion spring 46A is positioned between the first protrusion 42A and the third protrusion 47A, and the second torsion spring 46B is positioned between the second protrusion 42B and the fourth protrusion 47B.

As shown in FIG. 15A, the first and second torsion springs 46A and 46B include a first fetch line 461 fixed to fixing protrusions 471 and 472, and a second fetch line 463 elastically supported on one surface 41 A of the body 41.

Still referring to FIG. 15A, the first collecting vessel 40 normally closes the bottom end of the body 41 by the elastic force of the first and second torsion springs 46A and 46B.

When the suction force is generated by the operation of the vacuum motor 50, the first collecting vessel 40 prevents reduction of the suction force by closing the bottom end of the body 41 by the discharge plate 45.

In addition, in a state where the vacuum motor 50 stops the operation, when the amount of the objects is over a reference amount, namely, when the weight of the objects is over the elastic force of the first and second torsion springs 46A and 46B, the first collecting vessel 40 freely drops the objects by opening the bottom end of the body 41 by rotating one side of the discharge plate 45 around the hinge rod 49 as shown in FIG. 15B.

After all the objects collected in the first collecting vessel 40 are freely dropped, the discharge plate 45 returns to the original position of FIG. 15A by the first and second torsion springs 46A and 46B.

Here, the reference amount for discharging the objects can be adjusted by varying the specifications of the torsion springs, namely, elastic coefficients or winding numbers.

The objects freely dropped from the first collecting vessel 40 are collected in the second collecting vessel 60. Preferably, the vacuum motor 50 disposed between the first and second collecting vessels 40 and 60 is appropriately covered not to interfere with the objects dropped from the first collecting vessel 40.

The operation of the ampule cutting apparatus in accordance with the present invention will now be described in detail.

In a state where the vacuum motor 50 is operated, the ampule head H is inserted into the main suction hole 311 of the nozzle 310 as shown in FIG. 10A.

When the ampule body B is pushed to the front surface of the housing 10 as shown in FIGS. 5 and 10B, one side of the shoulder S of the ampule A is supported in the two points of the shoulder positioning surface 316A, so that the ampule head H can be cut around the ampule neck N.

The cut ampule head H is sucked into the cyclone object collecting unit 20 through the main suction hole 311 along the suction tube 31. The minute flakes generated at the cutting part in the ampule head H cutting operation are sucked into the cyclone object collecting unit 20 through the plurality of auxiliary suction holes 313 and the main suction hole 311 along the suction tube 31.

The objects sucked into the cyclone object collecting unit 20 with the air are collected in the first collecting vessel 40 as shown in FIG. 3B, and the air contaminated by object is filtered by a general filter (not shown) installed in the cyclone object collecting unit 20, sucked into the vacuum motor 50 through an exhaust port 23 and an exhaust path P, and externally discharged.

On the other hand, while the suction operation is carried out by the vacuum motor 50, if the amount of the objects collected in the first collecting vessel 40 exceeds the reference amount, the discharge plate 45 of the first collecting vessel 40 is rotated to the lower direction to open the bottom end of the first collecting vessel 40. Therefore, the objects accumulated on the discharge plate 45 are freely dropped to the second collecting vessel 60.

After most of the objects collected in the first collecting vessel 40 are dropped to the second collecting vessel 60, the discharge plate 45 returns to the state of FIG. 15A by the first and second torsion springs 46A and 46B, thereby closing the bottom end of the first collecting vessel 40.

In this embodiment, two torsion springs are used, but one or more than two torsion springs can be used according to the needed elastic force.

As discussed earlier, in accordance with the present invention, the ampule cutting apparatus can optimize suction of the ampule head and the flakes, by obtaining the smooth suction path by forming the main suction hole and the plurality of auxiliary suction holes on the nozzle into which the ampule head is inserted.

In addition, the ampule cutting apparatus can easily cut the ampule with the minimum force, by forming the main suction hole of the nozzle in the streamline shape to correspond to the ampule head, and appropriately setting the installation angle of the ampule cutting unit in consideration of the ampule cutting angle.

Furthermore, the ampule cutting apparatus can maintain the wide suction path, optimize suction efficiency and prevent overheating of the vacuum motor, by easily cleaning the suction tube and removing alien substances from the suction tube by freely connecting or disconnecting the suction tube.

Finally, the ampule cutting apparatus can improve suction efficiency of the vacuum motor by setting the two steps of collecting vessels, reduce noises generated in the collecting operation of the cyclone object collecting unit, and sterilize the nozzle or suction tube contaminated by the injection by using the ultraviolet sterilizing unit.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An ampule cutting apparatus, comprising:
an ampule cutting unit for housing and cutting an ampule head;
a object collecting unit configured to suck the cut ampule head and minute flakes generated in the ampule cutting operation with the air and to separate the cut ampule head and the minute flakes from the air;
a negative pressure generating device for applying a negative pressure to the object collecting unit; and
a collecting unit for collecting the cut ampule head and the minute flakes sucked by the object collecting unit.

2. The ampule cutting apparatus as claimed in claim 1, wherein the object collecting unit has a cyclone object collecting structure.

3. The ampule cutting apparatus as claimed in any of claims 1 and 2, wherein the negative pressure generating device is a vacuum motor or a vacuum pump.

4. The ampule cutting apparatus as claimed in any of claims 1 to 3, wherein the ampule cutting unit comprises:
a suction tube having one side detachably coupled to an intake port of the object collecting unit;
a nozzle inserted into the suction tube; and
a fixing unit for fixing a front end of the nozzle to be aligned with a front end of a second side of the suction tube.

5. The ampule cutting apparatus as claimed in any of claims 1 to 4, further comprising:
a first coupling ring coupled to the intake port of the object collecting unit; and
a second coupling ring coupled to the second side of the suction tube,
wherein the first and second coupling rings are detachably coupled to each other.

6. The ampule cutting apparatus as claimed in any of claims 4 and 5, wherein the nozzle has a main suction hole having a diameter larger than the ampule head and smaller than an ampule body.

7. The ampule cutting apparatus as claimed any of claims 4 to 6, wherein the front end of the nozzle is detachably coupled to the fixing unit.

8. The ampule cutting apparatus as claimed in any of claims 4 to 7, further comprising:
a first coupling ring coupled to the intake port of the object collecting unit; and
a second coupling ring coupled to the second side of the suction tube,
wherein the first and second coupling rings are detachably coupled to each other.

9. The ampule cutting apparatus as claimed in any of claims 6 to 8, wherein the main suction hole of the nozzle has an inner circumference with a streamline shape corresponding to the shape of the ampule head.

10. The ampule cutting apparatus as claimed in any of claims 6 to 9, further comprising a plurality of auxiliary suction holes formed around the front end of the nozzle on which an inserted ampule neck is positioned, for sucking the minute flakes generated in the ampule cutting operation.

11. The ampule cutting apparatus as claimed in any of claims 5 to 10, wherein the first and second coupling rings are made of a sealing material.

12. The ampule cutting apparatus as claimed in any of claims 4 to 11, further comprising a sterilizing unit installed around the suction tube, the sterilizing unit sterilizing the suction tube and the nozzle.

13. The ampule cutting apparatus as claimed in any of claims 4 to 12, wherein the collecting unit comprises:
a first collecting vessel disposed at the bottom end of the object collecting unit, first collecting vessel primarily collecting the cut ampule head and the minute flakes sucked into the object collecting unit, and discharging a predetermined amount of the cut ampule head and the minute flakes to the lower direction when the negative pressure generating device stops the operation; and
a second collecting vessel for fmally collecting the cut ampule head and the minute flakes discharged from the first collecting vessel.

14. The ampule cutting apparatus as claimed in claim 13, wherein the first collecting vessel comprises:
a body having its top and bottom ends opened and its top end detachably coupled to be linked to the cyclone object collecting unit;
a discharge plate hinge-coupled to one side of the bottom end of the body, for opening or closing the bottom end of the body; and
at least one elastic member installed at the hinge-coupling part of the discharge plate and the body, for elastically coupling the discharge plate to the body.

15. The ampule cutting apparatus as claimed in claim 14, wherein the at least one elastic member comprises a torsion spring.

16. The ampule cutting apparatus as claimed in any of claims 1 to 15, further comprising a housing for housing the ampule cutting unit, the object collecting unit, the collecting unit, and the negative pressure generating device.

17. The ampule cutting apparatus as claimed in claim 16, further comprising a protruding unit is extended from one surface of the housing, the protruding unit housing the ampule cutting unit, the protruding unit having a bottom surface has an inclination angle of substantially 5 to 85° to a horizontal plane.

18. The ampule cutting apparatus as claimed in claim 16, further comprising a sterilizing unit.

19. The ampule cutting apparatus as claimed in claim 18, wherein the sterilizing unit comprises:
an ultraviolet lamp disposed adjacently to a suction tube;
a grill unit formed at a part of the suction tube adjacent to the ultraviolet lamp,; and
a plurality of ultraviolet transmission members inserted into the grill unit, for sealing up the grill unit.

20. The ampule cutting apparatus as claimed in claim 19, wherein the plurality of ultraviolet transmission members are made of transparent fluorine-containing polymers.
